# FASCICULE DE BREVET EUROPEEN

(11) **EP 1 240 004 B1**
(45) Date de publication et mention de la délivrance du brevet: **14.04.2004**
(21) Numéro de dépôt: 00985441.5
(22) Date de dépôt: 14.12.2000
(51) Int. Cl.: B29C 70/00

(54) **PROCEDE DE FABRICATION D'UNE STRUCTURE COMPOSITE CREUSE ET STRUCTURE OBTENUE SELON CE PROCEDE**
VERFAHREN ZUR HERSTELLUNG EINES HOHLEN KÖRPERS AUS VERBUNDWERKSTOFF UND NACH DIESEM VERFAHREN HERGESTELLTER KÖRPER
METHOD FOR PRODUCING A HOLLOW COMPOSITE STRUCTURE AND STRUCTURE OBTAINED ACCORDING TO THIS METHOD

(30) Priorité: 14.12.1999 FR 9915728
(43) Date de publication de la demande: 18.09.2002
(73) Titulaire: Barlesi, Laurent, 75008 Paris (FR)
(72) Inventeur: Barlesi, Laurent, 75008 Paris (FR)
(74) Mandataire: Thinat, Michel
(86) Numéro de dépôt international: PCT/FR2000/003528
(87) Numéro de publication internationale: WO 2001/043937

(56) Documents cités:
- EP-A- 0 363 744
- EP-A- 0 503 142
- FR-A- 2 516 859
- US-A- 2 205 891
- US-A- 4 779 347

## Description

La présente invention a pour objet un procédé de fabrication par moulage de matière plastique d'un réservoir ou autre structure creuse composite de forme complexe, devant être renforcée par des fibres.

Il est connu de fabriquer de tels contenants, notamment des réservoirs devant contenir un fluide sous pressions tel que du G.P.L. Afin que l'épaisseur des parois ne soit pas excessive ce qui se traduirait par un encombrement important qui n'est pas toujours disponible dans les automobiles, il est connu de renforcer les parois par des fibres à haute ténacité. Il est connu par EP-A-503 142 d'assembler, dans un premier temps, les fibres par tissage, tricotage ou tressage pour former un élément de renforcement, puis d'appliquer cet élément autour d'un noyau de moulage et enfin de procéder à l'intégration de l'ensemble par moulage d'une résine comme defini dans le preambule de la revendication 1. Dans certaines applications, il est nécessaire de prévoir des tirants, également en fibres qui traversent la structure creuse.

Dans la suite de la description, on désignera sous l'expression "matériau composite", un matériau comportant une matrice et des éléments de renforcement. La matrice est constituée en général de matériau polymère (par exemple thermoplastique, thermodurcissable, élastomère) ou de matériaux métalliques ou minéraux. Les éléments de renforcement peuvent se présenter sous des formes diverses telles que des fibres F et/ou des rubans, par exemple, et être de différents types ou nature par exemple : minéral et/ou organique et/ou métallique.

De la même façon, on définira par l'expression "moyen de renfort" un élément "physique" qui peut se présenter sous différentes formes, telles que : un " tirant " reliant deux ou plusieurs parois de la structure, ou une surépaisseur de la paroi de la structure et/ ou une nervure ou gorge ou encore tout autre moyen physique contribuant à la résistance locale à la pression interne tels que des points d'assemblage différents. Ces différents moyens peuvent être utilisés seuls ou en combinaison.

Sur le support de moulage qui peut être par exemple un liner, une vessie gonflable ou un noyau fusible (procédé utilisé dans le moulage dit « à cire perdue ») ou tout autre support approprié on répartit des moyens de renfort. On procède dans un premier temps à la répartition des tirants et des fibres F à haute ténacité sur la surface extérieure du support de moulage telles que des fibres de verre, de carbone, d'aramide, de bore ou analogues qui sont ensuite recouvertes et imprégnées de résine polymérisable portée à haute température ou soumises à un bombardement d'électrons approprié. C'est-à-dire que pour former une pièce composite on imprègne la structure tissée d'une résine qui est ensuite polymérisée ou plus généralement durcie.

Toutefois, dès que les pièces à réaliser sont de formes complexes avec variations de forme ou d'épaisseur, la réalisation devient compliquée. Au lieu d'une simple structure tissée de fibres F de renforcement, il devient nécessaire de former des armatures spécifiques appropriées.

Le problème rencontré avec ce procédé est qu'il est long et par suite coûteux. Un premier objet de l'invention est de pallier cet inconvénient. Elle est basée sur l'idée qu'il est possible de réaliser indépendamment l'armature de fibres de renforcement et le moulage proprement dit.

Dans ces conditions, il est possible de réaliser les éléments de renfort grâce à des calculs de pré dimensionnements et simulations par éléments finis se traduisant par une carte donnant la répartition idéale des renforts fibreux tant en surface que dans l'espace, ainsi que la nature des fibres, le nombre de couches superposées, les motifs de tissage etc.

Le procédé de fabrication d'une structure creuse composite en matière polymère renforcée par des fibres consiste dans un premier temps à assembler les fibres pour former un élément de renforcement, puis à les appliquer sur le noyau de moulage et à procéder à l'intégration de l'ensemble par moulage.

Selon une caractéristique du procédé selon l'invention, la répartition des efforts à soutenir par la structure est simulée par le calcul par éléments finis donnant une cartographie des efforts à contenir, cette cartographie étant directement utilisée pour commander la fabrication des éléments de renforcement et la disposition desdits éléments.

Des zones à renforts unidirectionnels peuvent également être maintenues sur le tissu par couture dans les zones de la structure où les efforts mécaniques s'orientent selon une direction privilégiée. La préforme présente de préférence éventuellement après pliage un volume proche de celui de la pièce finale.

Le tissage peut être effectué à plat, selon un schéma déterminé, les bords de la pièce constituant l'armature étant rabattus et cousus autour du noyau de moulage. Mais, selon une autre caractéristique de l'invention, l'assemblage des fibres peut être réalisé en volume ou 3D.

Cette caractéristique permet d'introduire le noyau de moulage à l'intérieur de l'armature puis de mouler l'ensemble.

D'autres caractéristiques et avantages de l'invention apparaîtront au cours de la description qui va suivre de modes particuliers de réalisation, donnés uniquement à titre d'exemple non limitatif, en regard des dessins qui représentent :
- la figure 1, une vue en plan d'une armature de renfort selon l'invention;
- la figure 2, une vue de l'armature ouverte ;
- la figure 3, une vue de l'armature de la figure 2 fermée autour du noyau;
- la figure 4, un autre mode de réalisation.

Sur l'ensemble des figures, les mêmes références désignent les mêmes éléments. L'armature ou préforme est destinée à être glissée autour du noyau de moulage. L'exemple qui est représenté sur les figures se rapporte à un réservoir pour GPLc. Les réservoirs utilisés pour des gaz de pétrole liquéfiés ou " GPLc " sont soumis à une forte pression, de l'ordre de 3 MPa. Les bords 4,5,6,7 sont ensuite rabattus respectivement l'un sur l'autre et cousus ou assemblés l'un sur l'autre par tout moyen autour du noyau de moulage (non représenté).

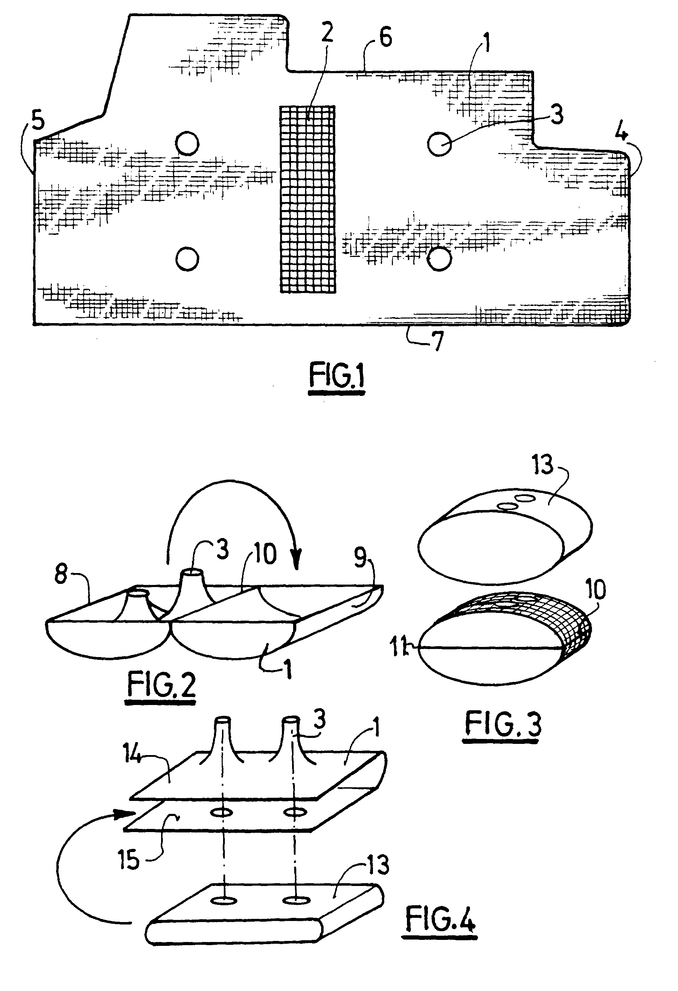

Sur la figure 1, on voit que la pièce 1 tissée ou tricotée à plat en fibres F à haute ténacité est le développé d'une surface en trois dimensions. Elle peut être constituée dans certaines zones 2 par plusieurs couches superposées . Elle présente également des trous 3, qui, après pliage en vis-à-vis, permettent l'introduction de tirants. En effet, dans le cas habituel de réservoir devant s'intégrer dans un logement tourmenté de la carrosserie, la répartition des pressions n'est pas identique dans tous les endroits de la surface. Afin d'éviter des épaisseurs uniformes trop grandes, on répartit donc des renforts soit en surface comme la bande 2, soit des tirants fixés perpendiculairement aux surfaces du réservoir.

L'enveloppe extérieure de la structure est, par exemple, formée d'un matériau composite. Le matériau composite est constitué d'une matrice, par exemple, en résine thermodurcissable époxy ou polyester, etc... Et d'au moins un élément de renfort pré-mentionné. Les fibres F peuvent être arrangées de différentes manières, par exemple sous la forme d'un tissu orienté (la majorité des fibres F est orientée de manière prépondérante), ou non orienté. Les fibres peuvent être des fibres de verre ou de carbone. Le composite peut comporter plusieurs couches de fibres F, l'orientation des couches entre elles étant choisie par rapport à la résistance à la pression souhaitée.

Le liner du réservoir , outre son rôle de barrière vis à vis du fluide contenu assure le rôle de support du matériau composite lors de la fabrication du réservoir, et la répartition des efforts dus à la pression interne. Il est typiquement en polymère thermoplastique choisi, par exemple, dans la liste suivante :
Les polyoléfines (polyéthylènes, polypropylènes), PE ou PP., les polyamides (PA11, PA12, PA6, 6-6, ...), le polycétone aliphatique, le polyéthylène téréphtalate ou PET, le polybutylène téréphtalate ou PBT, les polyacétals par exemple le POM (polyoxyméthylène), l'EVOH, les polymères fluorés, PVDF, PTFE (polytétrafluoroéthylène ou Teflon), etc....

Sur la figure 1, l'armature 1 était assemblée à plat puis repliée autour du noyau. Afin de diminuer le temps de montage, il est toutefois souhaitable de constituer le composite par tissage ou tricotage en trois dimensions ce qui permet, dans certains cas, d'enfiler l'armature sur le noyau en diminuant les opérations de reprise. Les points du tissu ne doivent toutefois pas être très serrés afin de permettre une imprégnation à coeur des fibres textiles par la résine.

Sur la figure 2, on distingue l'armature 1 en deux parties 8 et 9 réunies dans leur partie centrale par une charnière 10. La partie 8 comprend deux cheminées 3 destinées comme indiqué plus haut à permettre le passage de renforcements 3D de type chaussette ou de tirants (non représentés). Des cheminées identiques peuvent, bien entendu être formées dans la partie 9 mais à condition d'en réduire la hauteur. La ligne 11 opposée à la charnière 10 est, bien entendu, fermée par couture ou tout autre moyen. De toute façon, le réservoir est hermétiquement clos par le liner et le moulage ultérieur de résine thermodurcissable. Bien entendu, le renfort peut comprendre plus de deux parties réunies par des charnières. Sur la figure 3, le noyau 13 a été inclus dans la pièce d'armature.

La figure 4 représente un autre mode de réalisation avec une fabrication en 3D de l'armature 1. Dans ce cas, le renfort présente une forme en portefeuille comprenant deux côtés 14,15 espacés de l'épaisseur du noyau de moulage 13. Dans l'exemple représenté, le noyau 13 comprend deux trous correspondants aux puits 3 de passage des tirants de renforcement. Après insertion du noyau dans l'armature, on procède au moulage, sur l'armature 1.

Une armature 3D assemblée selon l'invention peut, bien entendu, être utilisée pour la réalisation de pièces composites pleines. Les tricots présentent des zones à points différents ou à rajout de fibres unidirectionnelles. Les fibres (F) sont assemblées par tissage, tricotage ou tressage.

Dans un autre mode de réalisation, on procède de la façon suivante :

L'armature est constituée, en fonction du résultat des calculs, par des fibres de renfort thermoplastiques constituées en fils hybrides, par exemple en PA 12 et fibres de carbone, par tressage, tricotage ou tressage. L'assemblage des fibres imprégnées est ensuite chauffé à une température de 180-250°C sous une pression de 0,5 à 5 MPa pendant quelques minutes, ce qui fixe la disposition des fibres par fusion du polymère d'imprégnation. L'ensemble est refroidi puis amené dans un moule de rotomoulage permettant de former le liner à l'intérieur de l'armature. Les fibres de renfort peuvent être en tout matériau tel que : carbone verre, métal tel que du bore.

Après quoi, la structure peut être recouverte d'une enveloppe présentant, par exemple une bonne résistance aux chocs.

## Revendications

1. Procédé de fabrication d'une structure composite creuse en matière plastique renforcée par des fibres (F) consistant, dans un premier temps à assembler les fibres (F) les fibres (F) sont assemblées par tissage, tricotage ou tressage pour former un élément de renforcement (1), puis à appliquer cet élément autour d'un noyau de moulage (13) et à procéder à l'intégration de l'ensemble par moulage d'une résine, **caractérisé en ce que** la répartition des efforts à soutenir par la structure est simulée par le calcul par éléments finis donnant une cartographie des efforts à contenir, cette cartographie étant directement utilisée pour commander la fabrication et la disposition de l'élément de renforcement (1).

2. Procédé de fabrication selon la revendication 1, **caractérisé en ce que** l'assemblage des fibres est effectué à plat, le renfort (1) étant ensuite replié et fermé autour du noyau de moulage (13).

3. Procédé de fabrication selon la revendication 1, **caractérisé en ce que** l'assemblage des fibres (F) est réalisé en trois dimensions.

4. Procédé de fabrication selon la revendication 1, **caractérisé en ce** l'élément de renfort est constitué d'au moins deux parties (8,9) articulées autour d'une charnière (10).

5. Procédé de fabrication selon l'une quelconque des revendications précédentes, **caractérisé en ce que**, lors de la fabrication, sont formés des renforts par couches superposées (2) et des puits (3) de passage de tirants.

6. Procédé selon l'une quelconque des revendications précédentes, **caractérisé en ce que** les tricots présentent des zones à points différents ou à rajout de fibres unidirectionnelles.

7. Procédé de fabrication d'une structure composite creuse en matière plastique renforcée par des fibres (F) charactérisé en ce que ce procédé consiste à calculer la répartition des efforts à soutenir par la structure par le calcul par éléments finis donnant une cartographie des efforts à contenir, cette cartographie étant directement utilisée pour commander la fabrication et la disposition de l'élément de renforcement (1), l'élément (1) étant constitué par des fils hybrides assemblés en volume puis chauffés, pour donner une structure rigide qui est introduite dans un moule de rotomoulage du liner.

## Patentansprüche

1. Verfahren zur Herstellung eines hohlen Körpers aus faserverstärktem (F) Verbundwerkstoff aus Kunststoff, das zunächst darin besteht, die Fasern (F) durch Weben, Wirken oder Flechten zu verbinden, um ein Verstärkungselement (1) zu bilden, danach dieses Element um einen Formkern (13) zu wickeln und das Ganze durch Einformung eines Harzes zu verbinden, **dadurch gekennzeichnet, dass** die Verteilung der vom Körper abzufangenden Beanspruchung durch Berechnung durch finite Elemente simuliert wird, die ein Kennfeld der zu enthaltenen Beanspruchung ergibt, wobei dieses Kennfeld direkt verwendet wird, um die Herstellung und Anordnung des Verstärkungselements (1) zu steuern.

2. Herstellungsverfahren nach Anspruch 1, **dadurch gekennzeichnet, dass** die Verbindung der Fasern flach erfolgt, wobei die Verstärkung (1) danach um den Formkern (13) gelegt und geschlossen wird.

3. Herstellungsverfahren nach Anspruch 1, **dadurch gekennzeichnet, dass** der Faserverbund (F) in drei Richtungen durchgeführt wird.

4. Herstellungsverfahren nach Anspruch 1, **dadurch gekennzeichnet, dass** das Verstärkungselement aus mindestens zwei Teilen (8, 9) besteht, die um ein Scharnier (10) gelenkig angebracht sind.

5. Herstellungsverfahren nach einem der vorhergehenden Ansprüche, **dadurch gekennzeichnet, dass** bei der Herstellung Verstärkungen aus übereinanderliegenden Schichten (2) und Öffnungen (3) zum Hindurchführen von Bolzen modelliert werden.

6. Verfahren nach einem der vorhergehenden Ansprüche, **dadurch gekennzeichnet, dass** die Wirkwaren Bereiche mit unterschiedlichen Maschen oder mit in eine Richtung laufenden hinzugefügten Fasern aufweisen.

7. Verfahren zur Herstellung eines hohlen Körpers aus faserverstärktem (F) Verbundwerkstoff aus Kunststoff, **dadurch gekennzeichnet, dass** dieses Verfahren darin besteht, die Verteilung der vom Körper abzufangenden Beanspruchung durch Berechnung durch finite Elemente zu berechnen, die ein Kennfeld der zu enthaltenen Beanspruchung ergibt, wobei dieses Kennfeld direkt verwendet wird, um die Herstellung und Anordnung des Verstärkungselements (1) zu steuern, wobei das Element (1) von volumenmäßig zusammengefügten und dann erwärmten Hybridfasern gebildet wird, um einen starren Körper zu ergeben, der in eine Rotationsform des Liners eingefügt wird.

## Claims

1. Method for producing a hollow composite structure in plastic material reinforced with fibres (F) consisting, initially, of assembling the fibres (F), fibres F being assembled by weaving, knitting or braiding to form a reinforcement element (1), then of applying this element around a moulding core (13) and proceeding with integration of the assembly by moulding a resin, **characterized in that** the distribution of stresses to be borne by the structure is simulated by finished element computation giving a cartography of the stresses to be contained, this cartography being directly used to control production and arrangement of the reinforcement element (1).

2. Production method as in claim 1, **characterized in that** the fibres are flat assembled, the reinforcement (1) then being folded and closed around the moulding core (13).

3. Production method as in claim 1, **characterized in that** the assembly of fibres (F) is made in three dimensions.

4. Production method as in claim 1, **characterized in that** this reinforcement element consists of at least two parts (8,9) articulated around a hinge (10).

5. Production method as in any of the preceding claims, **characterized in that**, during manufacture, reinforcements in superimposed layers (2) are formed and well holes (3) for the passing of stays.

6. Method as in any of the preceding claims **characterized in that** the knits have zones with different stitches or have added unidirectional fibres.

7. Method for producing a hollow composite structure in plastic material reinforced with fibres (F) **characterized in that** this method consists of calculating the distribution of stresses to be borne by the structure by finished element computation giving a cartography of the stresses to be contained, this cartography being directly used to control the manufacture and arrangement of the reinforcement element (1), element (1) consisting of hybrid threads that are volume assembled then heated to give a rigid structure which is placed inside a rotor-moulding mould of the liner.
